# EUROPEAN PATENT APPLICATION

(11) **EP 3 506 054 A1**
(43) Date of publication of application: **03.07.2019**
(21) Application number: 17210604.9
(22) Date of filing: 27.12.2017
(51) Int. Cl.: G06F 3/01

(54) **ENABLING RENDERING, FOR CONSUMPTION BY A USER, OF MEDIATED REALITY CONTENT**

(71) Applicant: Nokia Technologies Oy, 02610 Espoo (FI)
(72) Inventor: LEPPÄNEN, Jussi, 33580 Tampere (FI); LEHTINIEMI, Arto, 33880 Lempäälä (FI); MATE, Sujeet Shyamsundar, 33720 Tampere (FI); ERONEN, Antti, 33820 Tampere (FI)
(74) Representative: Nokia EPO representatives

(57) **Abstract**

An apparatus comprising:
at least one processor; and
at least one memory including computer program code
the at least one memory and the computer program code configured to, with the at least one processor, cause the apparatus at least to perform:
enabling mediated reality for some but not all of a virtual space by enabling access to only a first portion of the virtual space; and
in response to detecting an interrupt, enabling mediated reality for some but not all of the virtual space by enabling access to only a portion of the virtual space consisting of a first portion of the virtual space and a second portion of the virtual space, wherein the first portion of the virtual space is separated at a distance from the second portion of the virtual space in the virtual space.

## Description

### TECHNOLOGICAL FIELD

Embodiments of the present invention relate to enabling rendering, for consumption by a user, of mediated reality content

### BACKGROUND

Mediated Reality allows a user to experience a fully or partially artificial environment (a virtual space) as a virtual scene at least partially rendered by an apparatus to a user. The virtual scene is determined by a point of view (virtual position) within the virtual space.

Six degrees of freedom (6DoF) describes mediated reality where the point of view (virtual position) is determined by both orientation (e.g. the three degrees of three-dimensional orientation) and location (e.g. the three degrees of three-dimensional location).

### BRIEF SUMMARY

It may, in some circumstances, be desirable to allow a user, who may, for example, be a content consumer or a content engineer, to comprehend a virtual space without fully rendering the virtual space to that user.

According to various, but not necessarily all, embodiments of the invention there is provided an apparatus comprising:
at least one processor; and
at least one memory including computer program code
the at least one memory and the computer program code configured to, with the at least one processor, cause the apparatus at least to perform:
   enabling mediated reality for some but not all of a virtual space by enabling access to only a first portion of the virtual space; and
   in response to detecting an interrupt, enabling mediated reality for some but not all of the virtual space by enabling access to only a portion of the virtual space consisting of a first portion of the virtual space and a second portion of the virtual space, wherein the first portion of the virtual space is separated at a distance from the second portion of the virtual space in the virtual space.

In some but not necessarily all examples the at least one memory and the computer program code are configured to, with the at least one processor, cause the apparatus at least to perform: before the interrupt, determining the first portion of the virtual space from a first volume of a real space in accordance with a mapping, and
after the interrupt, determining the first portion of the virtual space from the first volume of the real space in accordance with the mapping, and determining the second portion of the virtual space from a second volume of the real space in accordance with the mapping.

In some but not necessarily all examples the interrupt is caused by an event within the virtual space.

In some but not necessarily all examples the interrupt is caused by a virtual object leaving the first portion of the virtual space and moving to the second portion of the virtual space or wherein the interrupt is caused by an event at the second portion of the virtual space.

In some but not necessarily all examples, the apparatus is configured to enable a user to program events that cause interrupts.

In some but not necessarily all examples the at least one memory and the computer program code are configured to, with the at least one processor, cause the apparatus at least to perform: determining the first portion of the virtual space, before the interrupt, based on one or more expected locations of events in the virtual space.

In some but not necessarily all examples the at least one memory and the computer program code are configured to, with the at least one processor, cause the apparatus at least to perform: using a user position in the first volume or the second volume of the real space to determine a corresponding position of a virtual user in the first portion or the second portion of the virtual space in accordance with the mapping,
using the corresponding position of the virtual user in the first portion or the second portion of the virtual space to determine content rendered to the user,
wherein the first volume of the real space and the second volume of the real space are non-overlapping and adjacent, and, in combination, do not exceed a real volume to which the real space is limited.
In some but not necessarily all examples, the user position is defined by a location and an orientation of the user in the real space and wherein the corresponding position of the virtual user is defined by a location and an orientation in the virtual space.

In some but not necessarily all examples, the at least one memory and the computer program code are configured to, with the at least one processor, cause the apparatus at least to perform: enabling a virtual user to move from the first portion of the virtual space to the second portion of the virtual space when the user moves from the first volume of the real space to the second volume of the real space.
In some but not necessarily all examples the at least one memory and the computer program code are configured to, with the at least one processor, cause the apparatus at least to perform: increasing a size of the second portion of the virtual space, with consequential re-sizing of the corresponding second volume of the real space after the user enters the second volume of the real space.
In some but not necessarily all examples the at least one memory and the computer program code are configured to, with the at least one processor, cause the apparatus at least to perform: rendering a visible or audible portal between the first portion of the virtual space and the second portion of the virtual space
In some but not necessarily all examples, the at least one memory and the computer program code are configured to, with the at least one processor, cause the apparatus at least to perform: enabling re-sizing of the first portion of the virtual space and the second portion of the virtual space, with consequential re-sizing of the corresponding first volume and second volume of the real space.

In some but not necessarily all examples configured to enabling access to only one or more portions of the virtual space at a rendering device by restricting data communicated to the rendering device to only data that enables access to only the one or more portions of the virtual space.

According to various, but not necessarily all, embodiments of the invention there is provided a method comprising:
enabling mediated reality for some but not all of a virtual space by enabling access to only a first portion of the virtual space; and
in response to detecting an interrupt, enabling mediated reality for some but not all of the virtual space by enabling access to only a portion of the virtual space consisting of a first portion of the virtual space and a second portion of the virtual space, wherein the first portion of the virtual space is at a distance from the second portion of the virtual space in the virtual space.

According to various, but not necessarily all, embodiments of the invention there is provided a computer program that when run on a processor enables the processor to:
enable mediated reality for some but not all of a virtual space by enabling access to only a first portion of the virtual space; and
in response to detecting an interrupt, enable mediated reality for some but not all of the virtual space by enabling access to only a portion of the virtual space consisting of a first portion of the virtual space and a second portion of the virtual space, wherein the first portion of the virtual space is at a distance from the second portion of the virtual space in the virtual space.

According to various, but not necessarily all, embodiments of the invention there is provided an apparatus comprising:
means for enabling mediated reality for some but not all of a virtual space by enabling access to only a first portion of the virtual space; and
means for enabling mediated reality for some but not all of the virtual space, in response to detecting an interrupt, by enabling access to only a portion of the virtual space consisting of a first portion of the virtual space and a second portion of the virtual space, wherein the first portion of the virtual space is separated at a distance from the second portion of the virtual space in the virtual space.

According to various, but not necessarily all, embodiments of the invention there is provided an apparatus comprising:
at least one processor; and
at least one memory including computer program code
the at least one memory and the computer program code configured to, with the at least one processor, cause the apparatus at least to perform:
   enabling mediated reality for some but not all of a virtual space by enabling access to a first portion of the virtual space but not enabling access to a second portion of the virtual space nor a third portion of the virtual space; and
   in response to detecting an interrupt, enabling mediated reality for some but not all of the virtual space by enabling access to a portion of the virtual space comprising the first portion of the virtual space and the second portion of the virtual space but not including the third portion of the virtual space, wherein the first portion of the virtual space is separate to the second portion of the virtual space and is separated at a distance from the second portion of the virtual space in the virtual space by the third portion of the virtual space.

According to various, but not necessarily all, embodiments of the invention there is provided a method comprising:
enabling mediated reality for some but not all of a virtual space by enabling access to a first portion of the virtual space but not enabling access to a second portion of the virtual space nor a third portion of the virtual space; and
in response to detecting an interrupt, enabling mediated reality for some but not all of the virtual space by enabling access to a portion of the virtual space comprising the first portion of the virtual space and the second portion of the virtual space but not including the third portion of the virtual space, wherein the first portion of the virtual space is separate to the second portion of the virtual space and is separated at a distance from the second portion of the virtual space in the virtual space by the third portion of the virtual space.

According to various, but not necessarily all, embodiments of the invention there is provided a computer program that when run on a processor enables the processor to:
enable mediated reality for some but not all of a virtual space by enabling access to a first portion of the virtual space but not enabling access to a second portion of the virtual space nor a third portion of the virtual space; and
in response to detecting an interrupt, enable mediated reality for some but not all of the virtual space by enabling access to a portion of the virtual space comprising the first portion of the virtual space and the second portion of the virtual space but not including the third portion of the virtual space, wherein the first portion of the virtual space is separate to the second portion of the virtual space and is separated at a distance from the second portion of the virtual space in the virtual space by the third portion of the virtual space.

According to various, but not necessarily all, embodiments of the invention there is provided a method comprising: enabling mediated reality for some but not all of a virtual space by enabling access to a portion of the virtual space associated with tracked locations of at least a first live performer and a second live performer but not enabling access to a second portion of the virtual space; and
in response to detecting an interrupt, enabling mediated reality for some but not all of the virtual space by enabling access to a portion of the virtual space
associated with a tracked location of at least the first live performer and to a portion of the virtual space associated with a tracked location of at least the second live performer, wherein the first portion of the virtual space is separate to the second portion of the virtual space.

According to various, but not necessarily all, embodiments of the invention there is provided examples as claimed in the appended claims.

### BRIEF DESCRIPTION

For a better understanding of various examples that are useful for understanding the detailed description, reference will now be made by way of example only to the accompanying drawings in which:
Figs 1A, 1B, 1C, 1D illustrates examples of a sound space at different times and Figs 2A, 2B, 2C, 2D illustrates examples of a corresponding visual space at those times;
Figs 3A, 3B, 4A, 4B, 5A, 5B. illustrate rendering of mediated reality using virtual content including spatial audio content;
Fig 6 illustrates an example of a method;
Figs 7A, 7B and 7C illustrate the real space and virtual space during the method;
Figs 8A and 8B illustrate examples of a virtual space in which an event-based interrupt occurs;
Fig 9A and 9B illustrate an example of a virtual space and a real space and re-sizing of the first volume and the second volume;
Fig 10A illustrates an example of an apparatus that is configured to perform the described methods and provide the described systems;
Fig 10B illustrates an example of a delivery mechanism for a computer program.

### DEFINITIONS

"*artificial environment*" may be something that has been recorded or generated.

"*virtual visual space*" refers to fully or partially *artificial environment* that may be viewed, which may be three dimensional.
"*virtual visual scene*" refers to a representation of the *virtual visual space* viewed from a particular *point of view* (position) within the *virtual visual space.*
'*virtual visual object'* is a visible virtual object within a *virtual visual scene.*

"*sound space*" (or "virtual sound space") refers to an arrangement of sound sources in a three-dimensional space. A *sound space* may be defined in relation to recording sounds (a recorded sound space) and in relation to rendering sounds (a rendered sound space).
"*sound scene*" (or "virtual sound scene") refers to a representation of the *sound space* listened to from a particular *point of view (position)* within the *sound space.*
"*sound object*" refers to sound source that may be located within the *sound space.* A source sound object represents a sound source within the sound space, in contrast to a sound source associated with an object in the virtual visual space. A recorded sound object represents sounds recorded at a particular microphone or location. A rendered sound object represents sounds rendered from a particular location.
"*virtual space*" may mean a *virtual visual space,* mean a *sound space* or mean a combination of a *virtual visual space* and corresponding *sound space.* In some examples, the *virtual space* may extend horizontally up to 360° and may extend vertically up to 180°.
"*virtual scene*" may mean a *virtual visual scene,* mean a *sound scene* or mean a combination of a *virtual visual scene* and corresponding *sound scene.*
'*virtual object'* is an object within a *virtual scene,* it may be an artificial virtual object (e.g. a computer-generated virtual object) or it may be an image of a real object in a *real space* that is live or recorded. It may be a *sound object* and/or a *virtual visual object.*
*"Virtual position"* is a position within a virtual space. It may be defined using a *virtual location* and/or a *virtual orientation.* It may be considered to be a movable *'point of view'.*

"*Correspondence*" or "*corresponding*" when used in relation to a *sound space* and a *virtual visual space* means that the *sound space* and *virtual visual space* are time and space aligned, that is they are the same space at the same time.
"*Correspondence*" or "*corresponding*" when used in relation to a *sound scene* and a *virtual visual scene* (or visual scene) means that the *sound space* and *virtual visual space* (or visual scene) are corresponding and a *notional (virtual) listener* whose *point of view* defines the *sound scene* and a *notional (virtual) viewer* whose *point of view* defines the *virtual visual scene* (or visual scene) are at the same location and orientation, that is they have the same *point of view* (same virtual position).

"*real space*" (or "physical space") refers to a real environment, which may be three dimensional.
"*real scene*" refers to a representation of the *real space* from a particular *point of view* (position) within the real space.
"*real visual scene*" refers to a visual representation of the real space viewed from a particular real *point of view* (position) within the real space.

"*mediated reality*" in this document refers to a user experiencing, for example visually, a fully or partially artificial environment (a *virtual space)* as a *virtual scene* at least partially rendered by an apparatus to a *user.* The *virtual scene* is determined by a *point of view* (virtual position) within the *virtual space. Displaying* the *virtual scene* means providing a virtual visual scene in a form that can be perceived by the *user.*
"*augmented reality*" in this document refers to a form of *mediated reality* in which a *user* experiences a partially artificial environment (a *virtual space)* as a *virtual scene* comprising a *real scene,* for example a *real visual scene,* of a physical real environment (*real space*) supplemented by one or more visual or audio *elements* rendered by an apparatus to a user. The term augmented reality implies a mixed reality or hybrid reality and does not necessarily imply the degree of virtuality (vs reality) or the degree of mediality;
"*virtual reality*" in this document refers to a form of *mediated reality* in which a user experiences a fully artificial environment (a *virtual visual space*) as a *virtual scene* displayed by an *apparatus* to a *user*;

"*virtual content*" is content, additional to *real content* from a real scene, if any, that enables *mediated reality* by, for example, providing one or more artificial *virtual objects.*
"*mediated reality content*" is virtual content which enables a *user* to experience, for example visually, a fully or partially artificial environment (a *virtual space)* as a *virtual scene. Mediated reality content* could include interactive content such as a video game or non-interactive content such as motion video.
"*augmented reality content*" is a form of mediated reality content which enables a *user* to experience, for example visually, a partially artificial environment (a *virtual space)* as a *virtual scene. Augmented reality content* could include interactive content such as a video game or non-interactive content such as motion video.
"*virtual reality content*" is a form of mediated reality content which enables a user to experience, for example visually, a fully artificial environment (a *virtual space)* as a *virtual scene. Virtual reality content* could include interactive content such as a video game or non-interactive content such as motion video.

"*perspective-mediated*" as applied to *mediated reality, augmented reality or virtual reality* means that *user* actions determine the *point of view* (virtual position) within the virtual space, changing the *virtual scene*;
"*first person perspective-mediated*" as applied to *mediated reality, augmented reality or virtual reality* means *perspective mediated* with the additional constraint that the *user's* real *point of view* (location and/or orientation) determines the *point of view* (virtual position) within the *virtual space of a virtual user,*
"*third person perspective-mediated*" as applied to *mediated reality, augmented reality or virtual reality* means *perspective mediated* with the additional constraint that the *user's* real *point of view* does not determine the *point of view* (virtual position) within the *virtual space*;
"*user interactive*" as applied to *mediated reality, augmented reality or virtual reality means* that *user* actions at least partially determine what happens within the *virtual space*;

"*displaying*" means providing in a form that is perceived visually (viewed) by the *user.* "*rendering*" means providing in a form that is perceived by the *user*
"*virtual user*" defines the *point of view* (virtual position- location and/or orientation) in *virtual space* used to generate a *perspective-mediated sound scene and*/*or visual scene.* A virtual user may be a notional listener and/or a notional viewer.
"*notional listener*" defines the *point of view* (virtual position- location and/or orientation) in *virtual space* used to generate a *perspective-mediated sound scene,* irrespective of whether or not a *user* is actually listening
"*notional weaver*" defines the *point of view* (virtual position- location and/or orientation) in *virtual space* used to generate a *perspective-mediated visual scene,* irrespective of whether or not a *user* is actually viewing.

*Three degrees of freedom (3DoF)* describes *mediated reality* where the *virtual position* is determined by orientation only (e.g. the three degrees of three-dimensional orientation). In relation to *first person perspective-mediated reality,* only the *user's* orientation determines the *virtual position.*

*Six degrees of freedom (6DoF)* describes mediated reality where the *virtual position* is determined by both orientation (e.g. the three degrees of three-dimensional orientation) and location (e.g. the three degrees of three-dimensional location). In relation to *first person perspective-mediated reality,* both the *user's* orientation and the *user's* location in the *real space* determine the *virtual position.*

### DETAILED DESCRIPTION

The following description describes methods, apparatuses and computer programs that control how mediated reality content e.g. audio content and/or visual content is perceived.

In some, but not necessarily all examples, spatial audio rendering may be used to render sound sources as sound objects at particular positions within a sound space.

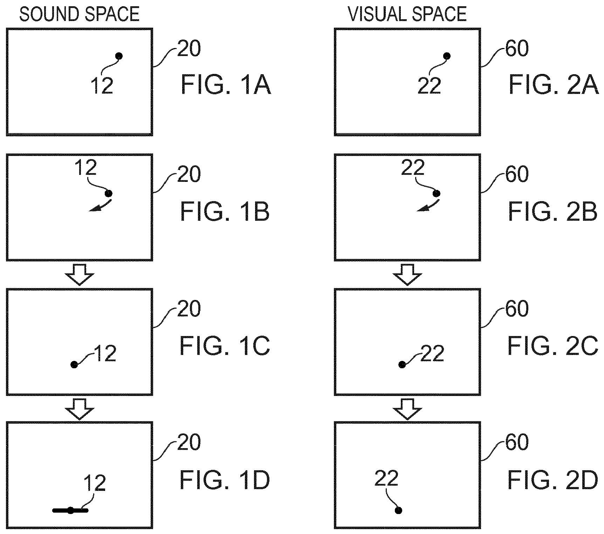

Fig 1A illustrates an example of a sound space 20 comprising a sound object 12 within the sound space 20. The sound object 12 may be a sound object as recorded (positioned at the same position as a sound source of the sound object) or it may be a sound object as rendered (positioned independently of the sound source). It is possible, for example using spatial audio processing, to modify a sound object 12, for example to change its sound or positional characteristics. For example, a sound object can be modified to have a greater volume, to change its location within the sound space 20 (Figs 1B & 1C) and/or to change its spatial extent within the sound space 20 (Fig 1D). Fig 1B illustrates the sound space 20 before movement of the sound object 12 in the sound space 20. Fig 1C illustrates the same sound space 20 after movement of the sound object 12. Fig 1D illustrates a sound space 20 after extension of the sound object 12 in the sound space 20. The sound space 20 of Fig. 1D differs from the sound space 20 of Fig. 1C in that the spatial extent of the sound object 12 has been increased so that the sound object 12 has a greater breadth (greater width).

The position of a sound source may be tracked to render the sound object 12 at the position of the sound source. This may be achieved, for example, when recording by placing a positioning tag on the sound source. The position and the position changes of the sound source can then be recorded. The positions of the sound source may then be used to control a position of the sound object 12. This may be particularly suitable where an up-close microphone such as a boom microphone or a Lavalier microphone is used to record the sound source.

In other examples, the position of the sound source within the sound space 20 may be determined during recording of the sound source by using spatially diverse sound recording. An example of spatially diverse sound recording is using a microphone array. The phase differences between the sound recorded at the different, spatially diverse microphones, provides information that may be used to position the sound source using a beam forming equation. For example, time-difference-of-arrival (TDOA) based methods for sound source localization may be used.

The positions of the sound source may also be determined by post-production annotation. As another example, positions of sound sources may be determined using Bluetooth-based indoor positioning techniques, or visual analysis techniques, a radar, or any suitable automatic position tracking mechanism.

In some examples, a visual scene 60 may be rendered to a user that corresponds with the rendered sound space 20. The visual scene 60 may be the scene recorded at the same time the sound source that creates the sound object 12 is recorded.

Fig. 2A illustrates an example of a visual space 60 that corresponds with the sound space 20. Correspondence in this sense means that there is a one-to-one mapping between the sound space 20 and the visual space 60 such that a position in the sound space 20 has a corresponding position in the visual space 60 and a position in the visual space 60 has a corresponding position in the sound space 20. Corresponding also means that the coordinate system of the sound space 20 and the coordinate system of the visual space 20 are in register such that an object is positioned as a sound object 12 in the sound space 20 and as a visual object 22 in the visual space 60 at the same common position from the perspective of a user. The sound space 20 and the visual space 60 may be three-dimensional.

Fig 2B illustrates a visual space 60 corresponding to the sound space 20 of Fig 1B, before movement of the visual object 22, corresponding to sound source 12 in the visual space 60. Fig 2C illustrates the same visual space 60 corresponding to the sound space 20 of Fig 1C, after movement of the visual object 22. Fig 2D illustrates the visual space 60 after extension of the sound object 12 in the corresponding sound space 20. While the sound space 20 of Fig. 1D differs from the sound space 20 of Fig. 1C in that the spatial extent of the sound object 12 has been increased so that the sound object 12 has a greater breadth, the visual space 60 is not necessarily changed.

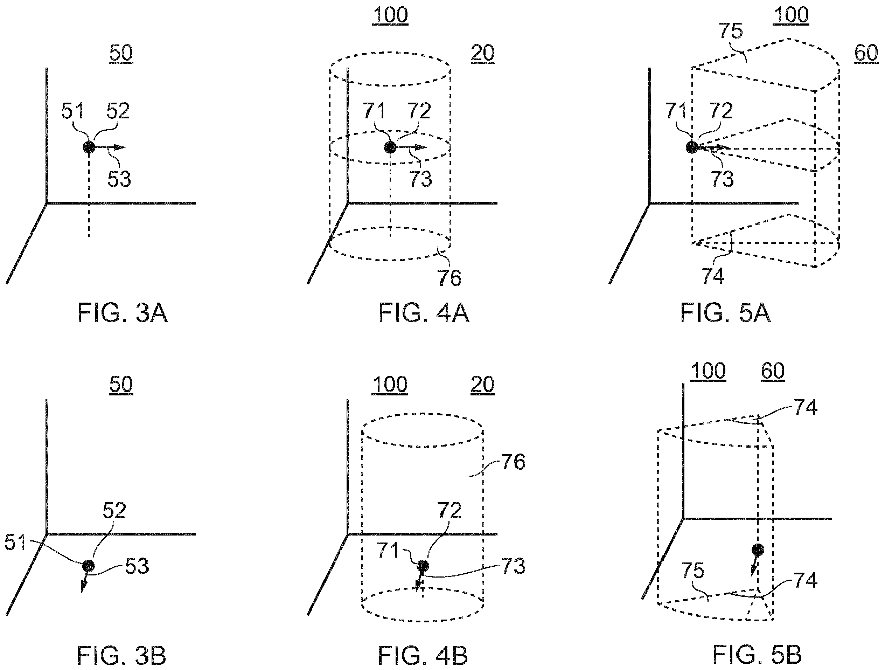

Figs 3A, 3B, 4A, 4B, 5A, 5B. illustrate rendering of mediated reality using virtual content including spatial audio content. In this context, mediated reality means the rendering of mediated reality for the purposes of achieving mediated reality for example augmented reality or virtual reality. In these examples, the mediated reality is first person perspective-mediated reality. It may or may not be user interactive. It may be 3DoF or 6DoF.

Figs 3A, 4A, 5A illustrate at a first time a real space 50, a virtual space 100. The virtual space 100 may be a sound space 20 (only), a visual space 60 (only) or a combination of sound space 20 and a corresponding visual space 60.

A user 51 in the real space 50 has a position defined by a location 52 and an orientation 53. The location is a three-dimensional location and the orientation is a three-dimensional orientation.

In 3DoF mediated reality, an orientation 53 of the user 51 in the real space 50 controls a virtual orientation 73 of a virtual user 71 in the virtual space 100. There is a correspondence between the orientation 53 and the virtual orientation 73 such that a change in the orientation 53 produces the same change in the virtual orientation 73.

The virtual orientation 73 of the virtual user 71 in combination with a virtual field of view 74 defines a virtual visual scene 75 within the virtual visual space 60. In some examples, it may also define a virtual sound scene 76. A virtual visual scene 75 is that part of the virtual visual space 60 that is displayed to a user. A virtual sound scene 76 is that part of the virtual sound space 20 that is rendered to a user.

The virtual sound space 20 and the virtual visual space 60 correspond in that a position within the virtual sound space 20 has an equivalent position within the virtual visual space 60. In 3DoF mediated reality, a change in the location 52 of the user 51 does not change the virtual position 72 or virtual orientation 73 of the virtual user 71.

In the example of 6DoF mediated reality, the situation is as described for 3DoF and in addition it is possible to change the rendered virtual space 100 (the rendered virtual sound scene 76 and the displayed virtual visual scene 75) by movement of a location 52 of the user 51. For example, there may be a mapping between the location 52 of the user 51 and the virtual location 72 of the virtual user 71. A change in the location 52 of the user 51 in the real space 50 produces a corresponding change in the virtual location 72 of the virtual user 71 in the virtual space 100. A change in the virtual location 72 of the virtual user 71 changes the rendered sound scene 76 and also changes the rendered visual scene 75.

This may be appreciated from Figs. 3B, 4B and 5B which illustrate the consequences of a change in location 52 and orientation 53 of the user 51 on a virtual scene e.g. respectively the rendered sound scene 76 (Fig. 4B) and the rendered visual scene 75 (Fig. 5B).

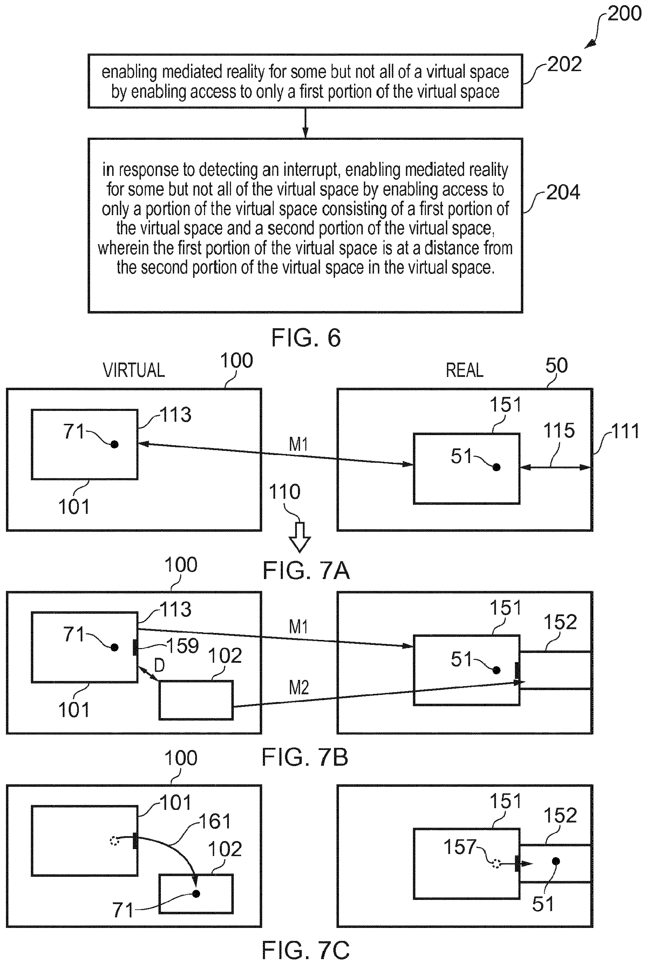

Fig 6 illustrates an example of a method 200. The method 200 controls the enablement of mediated reality.

The method 200, at block 202, comprises enabling mediated reality for some but not all of a virtual space 100 by enabling access to only a first portion 101 of the virtual space 100. An example of a first portion 101 of a virtual space 100 is illustrated in Figs 7A, 7B and 7C.

The method 200 comprises at block 202, in response to detecting an interrupt 110, enabling mediated reality for some but not all of the virtual space 100 by enabling access to only a portion of the virtual space 100 consisting of a first portion 101 of the virtual space 100 and a second portion 102 of the virtual space 100. The first portion 101 of the virtual space 100 is at a distance D from the second portion of the virtual space in the virtual space 100. Figs 7B and 7C illustrate examples of a first portion 101 of a virtual space 100 and a second portion 102 of a virtual space 100.

An example of the method 200 may also be understood with reference to Figs 7A, 7B, 7C. The method 200 comprises: enabling mediated reality for some but not all of a virtual space 100 by enabling access to a first portion 101 of the virtual space 100 but not enabling access to a second portion 102 of the virtual space nor a third portion of the virtual space 100; and in response to detecting an interrupt 110, enabling mediated reality for some but not all of the virtual space 100 by enabling access to a portion of the virtual space comprising the first portion 101 of the virtual space 100 and the second portion 102 of the virtual space 100 but not including the third portion of the virtual space 100, wherein the first portion 101 of the virtual space 100 is separate to the second portion 102 of the virtual space 100 and is separated at a distance D from the second portion 102 of the virtual space 100 in the virtual space 100 by the third portion of the virtual space 100.

In one example, a plurality of performers (which are examples of virtual objects) occupy a first portion 101 of the virtual space 100, then a first performer leaves the first portion 101 of the virtual space 100, causing the interrupt 110, and occupies the second portion 102 of the virtual space 100 The first performer who left the first portion 101 of the virtual space 100 is in a portion of the virtual space that is occupiable by a virtual user without having to make all the virtual space between the first performer and the first portion 101 of the virtual space occupiable by the virtual user.

This may be particularly advantageous when streaming a live performance by several performers whose locations in a real space are tracked. Each performer can have their own 'individual' portion of the virtual space that tracks their movement. When performers are physically grouped together in real space, the individual portions of the virtual space 100 of the performers of the group are consolidated to form a single contiguous joint portion of the virtual space. When a performer leaves the group, their individual portion of the virtual space (e.g. the second portion 102 of the virtual space 100) separated from the joint portion if the virtual space (e.g. the first portion 101 of the virtual space 100) as an independent portion of the virtual space. The content streamed can be limited to the individual' portions of the virtual space associated with performers, whether a joint portion or an independent portion. The virtual user can therefore occupy the location of a performer even when a performer moves unexpectedly. The size of one, many or all of the respective individual' portions of the virtual space associated with performers, whether a joint portion or an independent portion. may be determined automatically or may be determined manually e.g. by a director. Automatic determination may allow the available virtual space defined by the individual' portions to fit, when mapped, within the available real space. It may be desirable to adjust the size of the individual' portions of the virtual space so that a portion occupied by a virtual user is larger or is made larger.

An example of the method 200 may therefore be understood to comprise: enabling mediated reality for some but not all of a virtual space 100 by enabling access to a portion 101 of the virtual space 100 associated with tracked locations of at least a first performer and a second performer but not enabling access to a second portion 102 of the virtual space; and
in response to detecting an interrupt 110, enabling mediated reality for some but not all of the virtual space 100 by enabling access to a portion 101 of the virtual space
associated with a tracked location of at least the first performer and to a portion 102 of the virtual space associated with a tracked location of at least the second performer, wherein the first portion 101 of the virtual space 100 is separate to the second portion 102 of the virtual space 100.

Fig 7A illustrates an example of a virtual space 100 and a corresponding real space 50. The correspondence between the real space 50 and the virtual space 100 is in accordance with a mapping M1. The mapping M1 enables mediated reality. A position of a user 51 in the real space 50 determines a corresponding position of a virtual user 71 in the virtual space 100 in accordance with the mapping M1. The corresponding position of the virtual user in the virtual space 100 determines content rendered to the user 51.

The real space 50 is limited to a real volume by physical constraints 111. The physical constraints 111 may, for example, be walls of a room or another type of physical constraint such as furniture.

The virtual space 100 is limited to a first portion 101 of the virtual space 100 by virtual constraints 113. The virtual constraints 113 ensure that the first portion 101 of the virtual space 100 does not exceed the volume available, defined by constraints 111, in the real space 50.

The first portion 101 of the virtual space 100 has a corresponding first volume 151 of the real space 50 in accordance with the mapping M1.

The method 200 may determine a size of the first portion 101 of the virtual space 100 from the first volume 151 of the real space 50 in accordance with the mapping M1. The first volume 151 of the real space 50 may be selected so that it fits within the real volume of the real space 50 defined by the constraints 111. In some examples, the first volume 151 of the real space 50 may fit within the constraints 111 by at least a predetermined margin 115. As will be described later, this margin 115 enables the positioning of a second volume 152 within the real space 50 as illustrated in Fig 7B.

The method 200 may also determine a position of the first portion 101 of the virtual space 100 based upon expected locations of events 130 in the virtual space 100.

An expected location of an event may be based on prior knowledge of what will occur or prior knowledge of what is likely to occur. Prior knowledge of what will occur may, for example be based on a script for future events for live content and, for example, based on analysis of future content for recorded content. Prior knowledge of what is likely to occur may be based on machine learning, a Bayesian network or similar. By learning from past events, it is possible to predict future events and their locations.
Mediated reality is enabled with respect to the user position in the first volume 151 of the real space 50. The position of a user 51 in the first volume 151 of the real space 50 determines a corresponding position of a virtual user 71 in the first portion 101 of the virtual space 100 in accordance with the mapping M1. The corresponding position of the virtual user in the first portion 101 of the virtual space 100 determines content rendered to the user 51.

The position of the user 51 is defined by a location and an orientation in the real space 50. The corresponding position of the virtual user 71 is therefore also defined by a location and an orientation in the virtual space 100.

It will therefore be appreciated that Fig 7 illustrates that mediated reality can be enabled for some but not all of a virtual space 100 by enabling access to only a first portion 101 of the virtual space 100.

However, as previously described, in response to the interrupt 110, the method 200 enables mediated reality for some but not all of the virtual space 100 by enabling access to only a portion of the virtual space 100 consisting of the first portion 101 of the virtual space 100 and a second portion 102 of the virtual space 100. This is, for example, illustrated in Fig 7B.

Thus access is constrained. It is limited to the portion of the virtual space 100 consisting of the first portion 101 of the virtual space 100 and a second portion 102 of the virtual space 100. The first portion 101 of the virtual space 100 and the second portion 102 of the virtual space 100 themselves represent a portion, not a whole, of the virtual space 100. A portion of a virtual space may be a single volume or may, for example, be multiple non-contiguous volumes.

The virtual space 100 is limited to the first portion 101 of the virtual space 100 and the second portion 102 of the virtual space 100. In this example, the second portion 102 is not contiguous the first portion 101 of the virtual space 100 and is separated from the first portion 101 of the virtual space 100 by a distance D. The first portion 101 and a second portion 102 of the virtual space 100 do not therefore share any portion of the virtual space 100 nor do they have any common boundaries.

The first portion 101 of the virtual space 100 has a corresponding first volume 151 of the real space 50 in accordance with the mapping M1. The second portion 102 of the virtual space 100 has a corresponding second volume 152 of the real space 50 in accordance with a mapping M2. The differences between the mappings M1 and M2 removes (or reduces) the separation between the first portion 101 of the virtual space 100 and the second portion 102 of the virtual space 100 when mapped to the real space 50. In the example illustrated, the first volume 151 of the real space 50 and the second volume 152 of the real space 50 are non-overlapping and separated by a distance less than the distance corresponding to distance D in the virtual space 100. In this example the first volume 151 and the second volume 152 of the real space 50 are adjacent and contiguous.

The first volume 151 and the second volume 152 of the real space 50 may have any arbitrary size and/or position given the constraints 111. The second volume 152 may be positioned relative to the first volume 151 in any direction. The second volume 152 may be on any side of the first volume 151 (up, down, left, right, front, back).

A first portion 101 of the virtual space 100 may determine a corresponding first volume 151 of the real space 50 in accordance with the mapping M1. That is the first volume 151 of the real space 50 may be determined by virtual content and/or expected events. Alternatively, a first volume 151 of the real space 50 may determine a corresponding first portion 101 of the virtual space 100. That is the virtual content may be determined by the real space available- the first volume 151 of the real space 50.

A second portion 102 of the virtual space 100 may determine a corresponding second volume 152 of the real space 50 in accordance with the mapping M2. That is the second volume 152 of the real space 50 may be determined by virtual content and/or expected events. Alternatively, a second volume 152 of the real space 50 may determine a corresponding second portion 102 of the virtual space 100. That is the virtual content may be determined by the real space available or the best available space- the second volume 152 of the real space 50.

In this example, it should be noted that a continuous volume of the virtual space 100 that can contain the first portion 101 of the virtual space 100 and the second portion 102 of the virtual space 100, also contains at least an intermediate portion of the virtual space 100 separating the first and second portions 101, 102, has a size such that if it were mapped as a whole to the real space 50 by the mapping M1, it would not fit within the constraints 111 of the real space 50. Equivalently, a volume of the virtual space 100 corresponding to the real volume 50 defined by the constraints 111, in accordance with the mapping M1 is of insufficient size to accommodate a continuous volume of the virtual space 100 comprising both the first portion 101 of the virtual space 100 and the second portion 102 of the virtual space 100 (and also the intermediate portion of the virtual space 100 separating the first and second portions 101, 102).

However, the first volume 151 of the real space 50 corresponding to the first portion 101 of the virtual space 100 and the second volume 152 of the real space 50 corresponding to the second portion 102 of the virtual space 100, are of such a size that they both fit within the real volume defined by the constraints 111 of the real space 50. In the example illustrated, the first volume 151 does not change size or position and the second volume 152 is positioned within the margin 115 of the real space 50 between the first volume 151 and one or more constraints 111 of the real space 50.

In the example illustrated in Fig 7B, the first volume 151 of the real space 50 has a first floor area represented by the two-dimensional projection illustrated in Fig 7B and the second volume 152 of the real space 50 has a second floor area that is less than the first floor area. The area between the first floor area and the boundary of the real volume defined by the constraints 111 is occupied by the second floor area.

Mediated reality is still enabled with respect to a position of a user 51 in the real space 50. The user position in the first volume 151 of the real space 50 determines a corresponding position of a virtual user 71 in the first portion 101 of the virtual space 100 in accordance with the mapping M1. The corresponding position of the virtual user in the first portion 101 of the virtual space 100 determines content rendered to the user. The content creates a virtual scene within the virtual space 100 observed from the corresponding position of the virtual user in the virtual space 100.

Should the user 51 adopt a position in the second volume 152 of the real space 50, then that position determines a corresponding position of a virtual user 71 in the second portion 102 of the virtual space 100 in accordance with the mapping M2 (see Fig 7C). The corresponding position of the virtual user 71 in the second portion 102 of the virtual space 100 determines content rendered to the user. The content creates a virtual scene within the virtual space 100 observed from the corresponding position of the virtual user in the virtual space 100.

The method 200 enables a virtual user 71 to move from the first portion 101 of the virtual space 100 immediately to the second portion 102 of the virtual space 100 without travelling through the intermediate portion of the virtual space 100 between the first portion 101 of the virtual space 100 and the second portion 102 of the virtual space 100, when the user 51 moves from the first volume 151 of the real space 50 to the second volume 152 of the real space 50. For example, the user may walk from the first volume 151 into the immediately adjacent second volume 152 of the real space 50 as illustrated in Fig 7C.

In order to assist the user, a visible or audible portal 159 may be rendered, as virtual content, on or near a virtual constraint 113 of the first portion 101 of the virtual space 100 to direct the virtual user 71 to travel through the portal 159. The portal 159 directs the user 51 to move from the first volume 151 of the real space 50 into the second volume 152 of the real space 50 thereby causing the virtual user 71 to move from the first portion 101 of the virtual space 100 into the second portion 102 of the virtual space 100. It should of course be recognized that the user 51 in the real space 50 moves continuously from the first volume 151 to the second volume 152 of the real space, whereas the virtual user 71 in effect jumps in virtual space from the first portion 101 to the second portion 102 of the virtual space 100 without passing through the intermediate virtual space indicated by the distance D.

It may be advantageous to indicate within the virtual space 100 the existence of the portal 159 so that the user 51 is aware of the ability to transition from the first portion 101 of the virtual space 100 via the portal. The portal 159 may, for example, provide an indication of the transition destination.

The portal 159 may be created in response to detection of the interrupt 110. In some examples, but not necessarily all examples, the portal 159 may be removed following the interrupt 110 after a timeout period of non-use.

Fig 7C illustrates the movement 157 of the user 51 in real space 50 from the first volume 151 into the second volume 152 and the corresponding discontinuous jump 161 of the virtual user 71 from the first portion 101 of the virtual space 100 to the second portion 102 of the virtual space 100.

In the examples illustrated in Figs 7B and 7C, it is assumed that time runs from Fig 7B to Fig 7C and that the user moves from the first volume 151 of the real space 50 into the second volume 152 of the real space 50 and that there is therefore a corresponding jump in a position of the virtual user 71 from the first portion 101 of the virtual space 100 to the second portion 102 of the virtual space 100.

However, the process may also be reversible. For example, referring to Fig 7C, once the user is within the second volume 152 of the real space 50, the user may return to the first volume 151 of the real space 50. This causes a corresponding jump by the virtual user 71 from the second portion 102 of the virtual space 100 to the first portion 101 of the virtual space 100. A portal 159 (not illustrated) may be present at a boundary of the second portion 102 of the virtual space 100 to indicate to the user the direction in which they should walk to cause a transition from the second portion 102 of the virtual space 100 back to the first portion 101 of the virtual space 100.

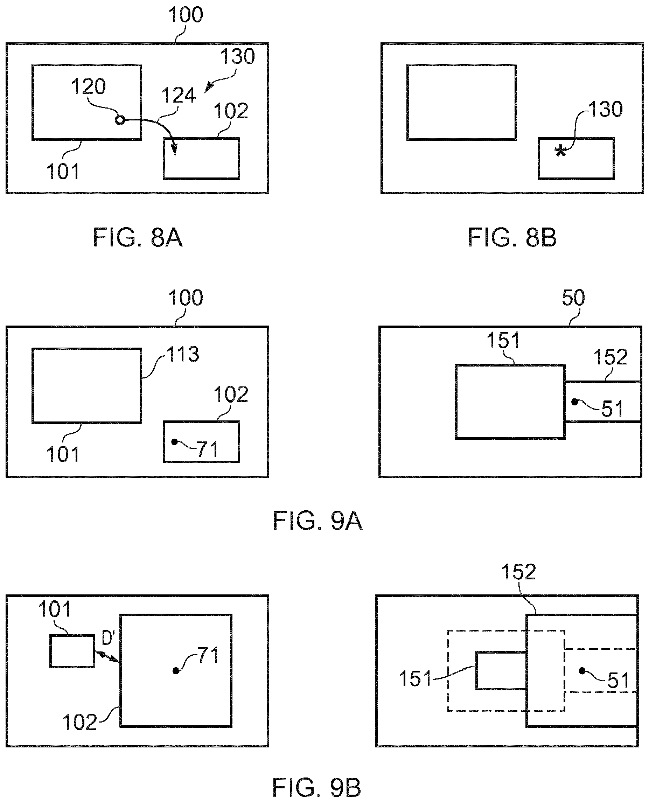

Figs 8A and 8B illustrate examples of a virtual space 100 in which an interrupt 110 occurs.

The interrupt 110 is caused by an event 130 within the virtual space 100. In Fig 8A, the interrupt 110 is caused by a virtual object 120 leaving the first portion 101 of the virtual space 100 and moving 124 to the second portion 102 of the virtual space 100.

An event 130 may be any change within the virtual content that is determined to be of significant enough importance. Importance may, for example, be determined based on the relationship of the event to the current virtual content consumed by the user and/or the relationship of the event to the previous virtual content consumed by the user and/or the relationship of the event to any programmed preferences of the user.

For example, if the user is on stage with a rock band and the lead singer runs out along an elevated walkway through the crowd to the end of the walkway, then the area available to the virtual user may be expanded to include not only the stage area (e.g. the first portion 101 of the virtual space 100 but also the end portion of the runway.(e.g. the second portion 102 of the virtual space 100)

In Fig 8B, the interrupt 110 is caused by a new event 130 at the second portion 102 of the virtual space 100. The event 130 may, for example, relate to an event defined in the content associated with the second portion 102 of the virtual space 100.

The method 200 may be adapted so that the user 51 is able to program one or more different events 130 that cause interrupts 110 or to modify or otherwise control which events 130 cause interrupts 110.

The event causes the interrupt and defines the location of the second portion 102 of the virtual space 100. The size of the second portion 102 of the virtual space 100 may, for example, depend upon the real space 50 that is available for the second volume 152 and the mapping M2.

Fig 9A illustrates an example of a virtual space 100 and a real space 50 which is equivalent to that illustrated in Fig 7C. The user 51 has moved from the first volume 151 into the second volume 152 of the real space 50 and the virtual user 71 has consequently jumped from the first portion 101 to the second portion 102 of the virtual space 100.

In this example, after this transition as illustrated in the example of Fig 9B, the second volume 152 is increased in size and the first volume 151 decreases in size.

The second volume 152 may initially (Fig 9A) be determined by a size of the margin 115 of the real volume 50 between the first volume 151 and the constraints 111. The second volume 152 is sized to fit in that margin.

After the transition (Fig 9B), the second volume 152 may be determined based on virtual content and/or events. This causes a reduction in the size of the first volume 151.

The first volume 151 and the second volume 152 remain adjacent and contiguous but their relative sizes change. The mappings M1 and M2 between the first volume 151 of the real space 50 and the first portion 101 of the virtual space 100 and between the second volume 152 of the real space 50 and the second portion 102 of the virtual space 100 result in a resizing of the first portion 101 and the second portion 102 of the virtual space 100.

In this example, the second volume 152 increases to a size significantly greater than the first volume 151. Assuming the mappings M1 and M2 remain the same, the second portion 102 increases to a size significantly greater than the first portion 101. There remains a distance D' between the first portion 101 and the second portion 102 of the virtual space 100. However, in other examples it may be that the first portion 101 and the second portion 102 are now contiguous and adjacent.

It will therefore be understood that the method 200 includes, in some examples, increasing a size of the second portion 102 of the virtual space 100 with consequential resizing of the corresponding second volume 152 of the real space 50 after the user enters the second volume 152 of the real space 50.

In some examples, the resizing of the second volume 152 and the consequential resizing of the second portion 102 of the virtual space 100 may be dependent upon a position of the user relative to the constraints 111 of the real space 50. The resizing may, for example, be constrained by the constraints 111. In addition, the resizing may be dependent upon a position of the user 51 relative to the first volume 151 of the real space 50 and the second volume 152 of the real space 50. For example, the second volume 152 may be resized so that the user 51 is now at the center of the second volume 152 (and the virtual user 71 is at the center of the second portion 102 of the virtual space 100). Alternatively or additionally, the second volume 152 may be resized so that the corresponding second portion 102 of the virtual space 100 covers a volume of the virtual space 100 in which there is expected to be future events 130.

In the above described examples, a first mapping M1 has been described between the first volume 151 of the real space 50 and the first portion 101 of the virtual space 100 and a second mapping M2 has been described between the second volume 152 of the real space 50 and the second portion 102 of the virtual space 100. These mappings M1, M2 may differ in absolute terms. M1 maps between each particular virtual position in the first portion 101 of the virtual space and each corresponding particular real position in the first volume 151 of the real space 50, in the same absolute way. M2 maps between each particular virtual position in the second portion 102 of the virtual space and each corresponding particular real position in the second volume 152 of the real space 50, in the same absolute way. However, M1 maps between each particular virtual position in the first portion 101 of the virtual space and each corresponding particular real position in the first volume 151 of the real space 50, in a different way to how M2 maps between each particular virtual position in the second portion 102 of the virtual space and each corresponding particular real position in the second volume 152 of the real space 50. This is because the positional offset between the first portion 101 of the virtual space 100 and second portion 102 of the virtual space is different to the positional offset of the first volume 151 of the real space 50 and the second volume 152 of the real space 50 and this difference in offset is reflected in the difference in the mappings.

The mappings M1 and M2 may, however, be the same in relative terms. That is they may use the same scaling. For example, the same positional change within the real space 50 (e.g. the first volume 101 of the real space or the second volume 152 of the real space 50) causes the same positional change within the virtual space 100 (e.g. the first portion 101 of the virtual space 100 or the second portion 102 of the virtual space).

The scaling of the mappings M1 and M2 may be the same. In other examples, the scaling may be different between the mappings M1 and M2.

In some, but not necessarily all, examples, the user may be able to control the scaling of mapping M1 and/or of mapping M2. In some but not necessarily all examples, the method 200 may automatically control the scaling of the mapping M1 and the scaling of the mapping M2.

In some but not necessarily all examples, the method 200 may change a scale factor of the mapping M1 automatically, for example, after the interrupt 110. This may, for example, occur to enable the second volume 152 to be placed within the margin 115 of the real volume 50 between the first volume 151 and the constraints 111 of the real space 50. Changing the scaling, for example by reducing the scale factor of M1 from virtual to real, will reduce the size of the first volume 151 required for a particular first portion 101, creating additional space for the second volume 152.

In the preceding examples, reference has been made to a single volume of the real space 50 (the second volume 152) that is additional to the volume of the real space 50 occupied by the user 51 (the first volume 151). This makes available to the virtual user 71 a single portion of the virtual space (the second portion 102) that is additional to the portion of the virtual space 100 occupied by the virtual user 71 (the first portion 101).
However, in other examples, multiple distinct volumes of the real space 50 may be provided in additional to the volume of the real space 50 occupied by the user 51 making available to the virtual user 71 multiple distinct corresponding portions of the virtual space that are additional to the portion of the virtual space 100 occupied by the virtual user 71.

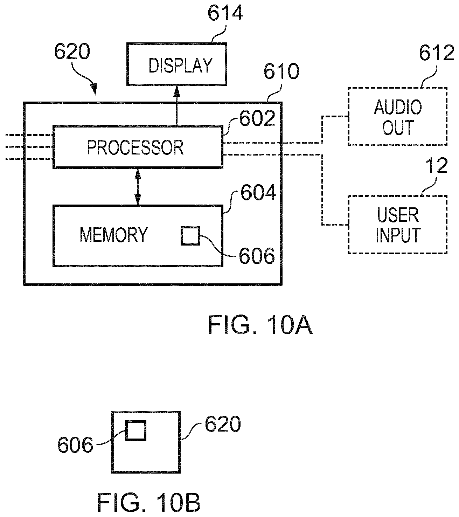

Fig 10A illustrates an example of an apparatus 620 that is configured to perform the above described methods. The apparatus 620 comprises a controller 610 configured to control the above described methods.

Implementation of a controller 610 may be as controller circuitry. The controller 610 may be implemented in hardware alone, have certain aspects in software including firmware alone or can be a combination of hardware and software (including firmware).

As illustrated in Fig 10A the controller 610 may be implemented using instructions that enable hardware functionality, for example, by using executable instructions of a computer program 606 in a general-purpose or special-purpose processor 602 that may be stored on a computer readable storage medium (disk, memory etc) to be executed by such a processor 602.

The processor 602 is configured to read from and write to the memory 604. The processor 602 may also comprise an output interface via which data and/or commands are output by the processor 602 and an input interface via which data and/or commands are input to the processor 602.

The memory 604 stores a computer program 606 comprising computer program instructions (computer program code) that controls the operation of the apparatus 620 when loaded into the processor 602. The computer program instructions, of the computer program 606, provide the logic and routines that enables the apparatus to perform the methods illustrated in Figs 7 and 8. The processor 602 by reading the memory 604 is able to load and execute the computer program 606.

The apparatus 620 therefore comprises:
at least one processor 602; and
at least one memory 604 including computer program code
the at least one memory 604 and the computer program code 606 configured to, with the at least one processor 602, cause the apparatus 620 at least to perform:
enabling mediated reality for some but not all of a virtual space 100 by enabling access to only a first portion 101 of the virtual space 100; and
in response to detecting an interrupt 110, enabling mediated reality for some but not all of the virtual space 100 by enabling access to only a portion of the virtual space 100 consisting of a first portion 101 of the virtual space 100 and a second portion 102 of the virtual space 100, wherein the first portion 101 of the virtual space 100 is separated at a distance D from the second portion 102 of the virtual space 100 in the virtual space 100.

The computer program 606, when run on the processor 602, causes the processor to: enable mediated reality for some but not all of a virtual space 100 by enabling access to only a first portion 101 of the virtual space 100; and
in response to detecting an interrupt 110, enable mediated reality for some but not all of the virtual space 100 by enabling access to only a portion of the virtual space 100 consisting of a first portion 101 of the virtual space 100 and a second portion 102 of the virtual space 100, wherein the first portion 101 of the virtual space 100 is at a distance D from the second portion 102 of the virtual space 100 in the virtual space 100.

In some but not necessarily all examples, the apparatus 620 and/or computer program 606 is configured to enable access to only one or more portions 101, 102 of the virtual space 100 at a rendering device by restricting data communicated to the rendering device to only data that enables access to only the one or more portions 101, 102 of the virtual space 100.

Examples may therefore be used for selectively streaming portions of a virtual space 100 The virtual space 100 may, for example, be a three-dimensional sound space 20 (only), a three-dimensional visual space 60 (only) or a three-dimensional combination of a three-dimensional sound space 20 and a corresponding three-dimensional visual space 60. The three-dimensional sound space 20 and/or the three-dimensional visual space 60 may be as recorded in which case they represent a volumetric capture scene.

As illustrated in Fig 10B, the computer program 606 may arrive at the apparatus 620 via any suitable delivery mechanism 630. The delivery mechanism 630 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 606. The delivery mechanism may be a signal configured to reliably transfer the computer program 606. The apparatus 620 may propagate or transmit the computer program 606 as a computer data signal.

Although the memory 604 is illustrated as a single component/circuitry it may be implemented as one or more separate components/circuitry some or all of which may be integrated/removable and/or may provide permanent/semi-permanent/ dynamic/cached storage.

Although the processor 602 is illustrated as a single component/circuitry it may be implemented as one or more separate components/circuitry some or all of which may be integrated/removable. The processor 602 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in the Fig 6 and the method steps described may represent steps in a method and/or sections of code in the computer program 606. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
at least one processor; and
at least one memory including computer program code
the at least one memory and the computer program code configured to, with the at least one processor, cause the apparatus at least to perform:
enabling mediated reality for some but not all of a virtual space by enabling access to only a first portion of the virtual space; and
in response to detecting an interrupt, enabling mediated reality for some but not all of the virtual space by enabling access to only a portion of the virtual space consisting of a first portion of the virtual space and a second portion of the virtual space, wherein the first portion of the virtual space is separated at a distance from the second portion of the virtual space in the virtual space.

2. An apparatus as claimed in claim 1, wherein the at least one memory and the computer program code are configured to, with the at least one processor, cause the apparatus at least to perform:
before the interrupt, determining the first portion of the virtual space from a first volume of a real space in accordance with a mapping, and
after the interrupt, determining the first portion of the virtual space from the first volume of the real space in accordance with the mapping, and determining the second portion of the virtual space from a second volume of the real space in accordance with the mapping.

3. An apparatus as claimed in any preceding claim, wherein the interrupt is caused by an event within the virtual space.

4. An apparatus as claimed in any preceding claim, wherein the interrupt is caused by a virtual object leaving the first portion of the virtual space and moving to the second portion of the virtual space or
wherein the interrupt is caused by an event at the second portion of the virtual space.

5. An apparatus as claimed in claim 3 or 4, configured to enable a user to program events that cause interrupts.

6. An apparatus as claimed in any preceding claim, wherein the at least one memory and the computer program code are configured to, with the at least one processor, cause the apparatus at least to perform:
determining the first portion of the virtual space, before the interrupt, based on one or more expected locations of events in the virtual space.

7. An apparatus as claimed in any preceding claim, wherein the at least one memory and the computer program code are configured to, with the at least one processor, cause the apparatus at least to perform:
using a user position in the first volume or the second volume of the real space to determine a corresponding position of a virtual user in the first portion or the second portion of the virtual space in accordance with the mapping,
using the corresponding position of the virtual user in the first portion or the second portion of the virtual space to determine content rendered to the user,
wherein the first volume of the real space and the second volume of the real space are non-overlapping and adjacent, and, in combination, do not exceed a real volume to which the real space is limited.

8. An apparatus as claimed in claim 7, wherein the user position is defined by a location and an orientation of the user in the real space and wherein the corresponding position of the virtual user is defined by a location and an orientation in the virtual space.

9. An apparatus as claimed in claim 7 or 8, wherein the at least one memory and the computer program code are configured to, with the at least one processor, cause the apparatus at least to perform:
enabling a virtual user to move from the first portion of the virtual space to the second portion of the virtual space when the user moves from the first volume of the real space to the second volume of the real space.

10. An apparatus as claimed in any of claims 7 to 9, wherein the at least one memory and the computer program code are configured to, with the at least one processor, cause the apparatus at least to perform:
increasing a size of the second portion of the virtual space, with consequential re-sizing of the corresponding second volume of the real space after the user enters the second volume of the real space.

11. An apparatus as claimed in any of claims 7 to 10, wherein the at least one memory and the computer program code are configured to, with the at least one processor, cause the apparatus at least to perform:
rendering a visible or audible portal between the first portion of the virtual space and the second portion of the virtual space

12. An apparatus as claimed in in any of claims 7 to 11, wherein the at least one memory and the computer program code are configured to, with the at least one processor, cause the apparatus at least to perform:
enabling re-sizing of the first portion of the virtual space and the second portion of the virtual space, with consequential re-sizing of the corresponding first volume and second volume of the real space.

13. An apparatus as claimed in any of claims 2 to 6, configured to enabling access to only one or more portions of the virtual space at a rendering device by restricting data communicated to the rendering device to only data that enables access to only the one or more portions of the virtual space.

14. A method comprising:
enabling mediated reality for some but not all of a virtual space by enabling access to only a first portion of the virtual space; and
in response to detecting an interrupt, enabling mediated reality for some but not all of the virtual space by enabling access to only a portion of the virtual space consisting of a first portion of the virtual space and a second portion of the virtual space, wherein the first portion of the virtual space is at a distance from the second portion of the virtual space in the virtual space.

15. A computer program that when run on a processor enables the processor to:
enable mediated reality for some but not all of a virtual space by enabling access to only a first portion of the virtual space; and
in response to detecting an interrupt, enable mediated reality for some but not all of the virtual space by enabling access to only a portion of the virtual space consisting of a first portion of the virtual space and a second portion of the virtual space, wherein the first portion of the virtual space is at a distance from the second portion of the virtual space in the virtual space.
